# EUROPEAN PATENT SPECIFICATION

(11) **EP 4 320 427 B1**
(45) Date of publication and mention of the grant of the patent: **04.11.2026**
(21) Application number: 22720443.5
(22) Date of filing: 04.04.2022
(51) Int. Cl.: G01N 21/77, G01N 31/22, G01N 21/94, G01N 21/64

(54) **METHOD FOR DETECTING LEAD**
VERFAHREN ZUR DETEKTION VON BLEI
PROCÉDÉ DE DÉTECTION DU PLOMB

(30) Priority: 06.04.2021 EP 21166957
(43) Date of publication of application: 14.02.2024
(60) Divisional application: 26197677.3
(73) Proprietor: Lumetallix Holding B.V., 1098 XG Amsterdam (NL)
(72) Inventor: HELMBRECHT, Lukas, 1098 XG Amsterdam (NL); NOORDUIN, Willem Lieuwe, 1098 XG Amsterdam (NL)
(74) Representative: De Vries & Metman
(86) International application number: PCT/EP2022/058881
(87) International publication number: WO 2022/214430

(56) References cited:
- CN-A- 109 444 096
- CN-A- 110 243 814
- HOLTUS TIM: "Shape-preserving transformation of carbonate minerals into lead halide perovskite semiconductors based on ion exchange/insertion reactions ''supplimental informaiton"", NATURE CHEMISTRY, 4 June 2018 (2018-06-04), pages 1 - 15, XP093194765
- HOLTUS TIM ET AL: "Shape-preserving transformation of carbonate minerals into lead halide perovskite semiconductors based on ion exchange/insertion reactions", NATURE CHEMISTRY, NATURE PUBLISHING GROUP UK, LONDON, vol. 10, no. 7, 4 June 2018 (2018-06-04), pages 740 - 745, XP036530432, ISSN: 1755-4330, [retrieved on 20180604], DOI: 10.1038/S41557-018-0064-1
- HOLTUS TIM ET AL: "SI Movie: Shape-preserving transformation of carbonate minerals into lead halide perovskite semiconductors based on ion exchange/insertion reaction", NATURE CHEMISTRY, 4 June 2018 (2018-06-04), XP093327551, Retrieved from the Internet <URL:https://www.nature.com/articles/s41557-018-0064-1>
- YAN JUN ET AL: "CH3NH3Br solution as a novel platform for the selective fluorescence detection of Pb2+ ions", SCIENTIFIC REPORTS, vol. 9, no. 1, 1 November 2019 (2019-11-01), US, XP093359709, ISSN: 2045-2322, Retrieved from the Internet <URL:https://www.nature.com/articles/s41598-019-52431-y> DOI: 10.1038/s41598-019-52431-y
- YAN JUN ET AL: "SI: CH3NH3Br solution as a novel platform for the selective fluorescence detection of Pb2 ions", SCIENTIFIC REPORTS, 1 September 2019 (2019-09-01), XP093359708, Retrieved from the Internet <URL:https://www.nature.com/articles/s41598-019-52431-y>
- WANG SHUYA ET AL: "Highly selective fluorescence turn-on determination of Pb(II) in Water by in-situ enrichment of Pb(II) and MAPbBr3 perovskite growth in sulfydryl functionalized mesoporous alumina film", SENSORS AND ACTUATORS B: CHEMICAL, ELSEVIER BV, NL, vol. 326, 29 September 2020 (2020-09-29), XP086327441, ISSN: 0925-4005, [retrieved on 20200929], DOI: 10.1016/J.SNB.2020.128975
- LI DONGYU ET AL: "Cesium tin halide perovskite quantum dots as an organic photoluminescence probe for lead ion", JOURNAL OF LUMINESCENCE, ELSEVIER BV NORTH-HOLLAND, NL, vol. 216, 19 August 2019 (2019-08-19), XP085863092, ISSN: 0022-2313, [retrieved on 20190819], DOI: 10.1016/J.JLUMIN.2019.116711

## Description

The invention pertains to a method for detecting lead.

For centuries lead has been used in many applications, varying from plumbing to paint, and from crystal glass to bullets. Due to its extensive use, lead can be found as contaminant in many locations, varying from paint to drinking water and soil. Unfortunately, lead is also very toxic, even low doses can have immediate danger for life and health. Hence, detection, also in low amounts, is of prime importance in many fields, ranging from healthcare and toxicity studies to mining companies and forensics.

Many methods for detecting lead are known in the art.

For example, atomic absorption spectroscopy (AAS) is an extremely sensitive and chemoselective method for detecting lead. However, it requires sophisticated and bulky lab setups, complicated sample preparation, and highly-skilled users, thus hindering many practical applications. Additionally, it is difficult to apply on solid samples and not suitable for scanning a surface.

X-Ray fluorescence spectroscopy (XFR) is sensitive and allows surface scanning (field of view ca. 1 cm in handheld detectors). It can also analyze insoluble materials. However, it requires expensive equipment and skilled users and has a narrow detection field that slows down scanning of large areas, thus hindering many practical applications.

Coloring tests offer a quick and cheap alternative to AAS and XRF. A common coloring reaction for the detection of lead is based on the reaction of rhodizonate, which results in a color change in the presence of lead. The low cost and ease of use have made this test a standard lead detection method for a wide range of situations (e.g. detection of lead in paint, ceramics, etc.). There are, however, disadvantages to this method. A major disadvantage of this method is that the color change can be difficult to observe on dark surfaces and poorly illuminated or dirty environments and that the color change itself can be ambiguous. Additionally, the test can give false positives with metals such as barium and copper.

There is need in the art for a method for detecting lead in high selectivity in low amounts, which can be applied easily on all types of samples, including solid substrates such as painted surfaces, where the presence of lead can easily be detected with the naked eye. The present invention provides such a method.

The invention pertains to a method for the detection of the presence of lead in a solid substrate suspected of containing lead, comprising the steps of
- contacting a solid substrate suspected of containing lead with a reagent composition comprising a liquid medium and a halide reagent capable of reacting with lead to form a lead halide perovskite, the solid substrate being selected from painted surfaces, glass, metals, and plastic, and
- subjecting the substrate to a light source with a wavelength that is shorter than the emission wavelength of the lead halide perovskite, and detecting the light emittance.

The crux of the present invention is that by contacting a solid substrate of interest with the reagent (part of the) lead in the sample is converted to a lead halide perovskite, which is a photoluminescent material.

It is noted that recently, methods have been described in which lead is detected by reacting it with a halide reagent, followed by detecting the presence of perovskite.

CN110243814 describes a lead ion indicator strip comprising halogen and cesium or formamidium. The indicator strip is dipped in a lead-containing solution, followed by drying. The lead content is determined by comparing the indicator strip with a set of standard color cards under visible light or UV light.

Li et al. (Journal of Luminescence 216 (2019) 116711) describe the detection of lead ions by contacting CsSnBr3 with Pb2+ ions in solution and monitoring the red shift and the change in FWHM.

Wang et al. (Sensors and Actuators: B. Chemical 326 (2021) 128975) describes a method in which sulfhydryl-modified mesoporous alumina is used as a lead-capturing agent by bringing the film in a lead-containing solution. After drying, the film is then contacted with MaBr, which results in perovskite formation.

CN109444096 describes a method for detecting lead using perovskite formation by grinding a lead-containing sample with a solid material (indicated as a glass) containing Cs and Br. Yan et al. (Scientific Reports 9 (2019), 15840) indicate that CH3NH3Br solutions can be used in the detection of Pb2+ ions. The research focused on Pb2+ ions in solution.

Thus, the references cited above make use of perovskite formation in the detection of lead. However CN110243814, Li et al., Wang et al., and Yan et al. all focus on the detection of lead in the form of Pb2+ in solutions, under controlled circumstances. CN109444096 makes use of a specific glass composition and co-grinding method. None of these references disclose or suggest that perovskite formation can be used to detect lead in solid substrates in an easy and efficient manner.

Additionally, one feature of the method of the present invention is that it allows direct detection of lead in the substrate in situ, that is, in its original location. This makes it possible to quickly and precisely evaluate where lead is present in a specific setting. An example of a possible application of this feature is to detect localized lead contamination in certain surroundings, e.g. in mines, manufacturing plants, etc. This is not disclosed or suggested in the references discussed above.

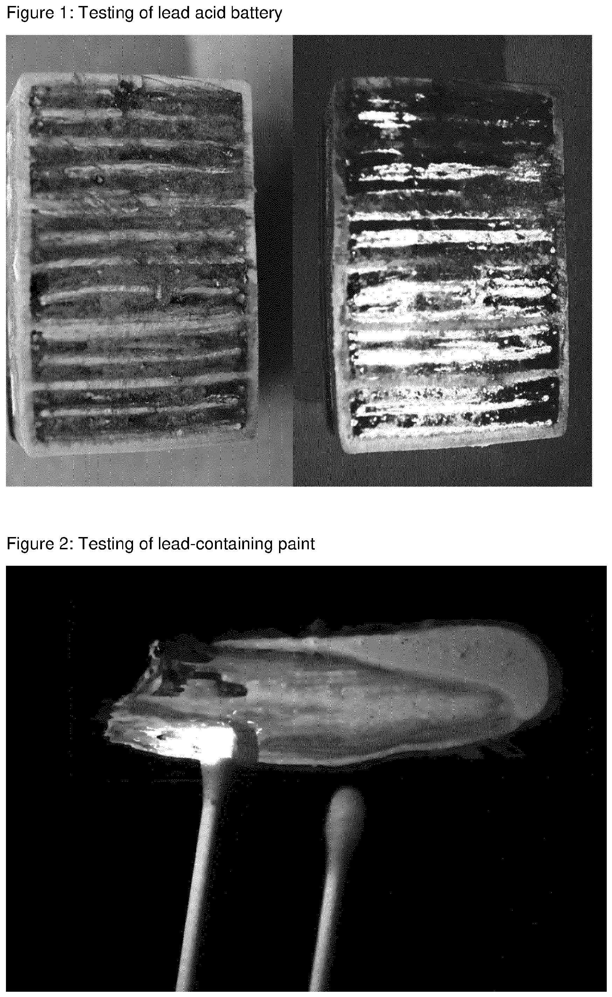

In the method according to the invention, subjecting the sample to a light source with a wavelength that is shorter than the emission wavelength of the lead halide perovskite material will result in photoluminescence which can easily be detected with the naked eye or via appropriate detection apparatus. A key difference to the established coloring tests (such as rhodizonate) that are based only on the perceived change in color, is that in the method of the invention detection is performed based on active light emission by photoluminescence. This photoluminescence makes detection of the presence of lead much easier and less ambiguous, in particular on dark surfaces and in poorly illuminated or dirty environments where color changes are difficult to detect. As an example reference is made to Figure 1 which shows the cross-section of a lead-acid battery. The left-hand photo shows the cross-section as is. the right-hand photo shows the cross-section after exposure to MABr. Bright green emission is visible as white highlight. As a further example, reference is made to Figure 2. Figure 2 shows a white lead-containing paint at the top of the photograph. Two cotton swabs are shown, both impregnated with reagent. The reagent-infused cotton swab on the left has been in contact with the lead-containing paint. It shows bright green luminescence under UV illumination (here visible as white highlight). The right-hand cotton swab was also infused with reagent. It has not been in contact with the paint and does not show light emission.

It is noted that the photoluminescent properties of lead halide perovskites are known in the art. This material is under development for use in, among other applications, solar cells.

The invention, specific embodiments thereof, and associated advantages will be discussed below. Reference will be made to the following Figures:
Figure 1 shows lead detection in a lead-acid battery.
Figure 2 shows lead detection in a lead-containing paint.
Figure 3 shows emission spectra of methylammonium lead halides.
Figure 4 shows emission spectra of formamidium lead halides.
Figure 5 shows Xray diffractograms of lead and lead carbonate before and after reaction with MaBr in IPA.

In the present invention, a solid sample is contacted with a halide reagent capable of reacting with lead to form a lead halide perovskite.

In general, perovskites are of the formula ABX₃. Lead halide perovskites are of the general formula APbX₃, in which X is a halogen selected from F, Cl, Br, and I. Lead halide perovskites of the formula APbX₃ may be organic or inorganic in nature. For inorganic lead halide perovskites, A will generally be a metal. For organic lead halide perovskites, A will be an organic cation. Examples include metal lead halide perovskites and organoamine lead halide perovskites. Different types of perovskite will be discussed in more detail below.

It is noted that in the context of the present invention it has been found to be irrelevant whether the lead halide perovskite is of the exact formula APbX₃. In general, compounds of the overall formula APbX_{1.5-4} may generate luminescence. Also, it will be clear to the skilled person that in sample analysis it is not always possible to determine the exact boundary of the perovskite where this formula would apply.

Lead halide perovskite is of the formula APbX₃, in which X is a halogen selected from F, Cl, Br, and I. As the lead is provided by the sample, the halide reagent should provide the other reactants for the perovskite formation. Accordingly, the reagent should provide the halide anion selected from F, Cl, Br, and I. It is preferred for the halide anion to be selected from Cl, Br, and I. The use of Br as anion is often preferred as bromide-containing perovskites provide a green luminescence that is easy to detect, also with the naked eye.

The use of a combination of different anions may also be attractive as they allow tuning of the luminescence spectrum. For example, a combination of Cl and Br can be used to provide luminescence in the blue region of the visual spectrum while a combination of Br and I can be used to provide luminescence in the red region of the visual spectrum. If a combination of two or more halide anions is used, it is generally preferred for each of the anions to be present in an amount of at least 10 mol.% of the total amount of anion to obtain the desired tailoring of the luminescence.

For example, in one embodiment, the halide ions comprise a combination of 20-90 mol.% Cl in combination with 80-10 mol.% Br, in particular 30-90 mol.% Cl in combination with 70-10 mol.% Br, more in particular 40-90 mol.% Cl in combination with 60-10 mol.% Br. This will result in luminescence in the blue region of the visual spectrum.

In another embodiment, the halide ions comprise a combination of 50-90 mol.% I in combination with 50-10 mol.% Br, in particular 60-90 mol.% I in combination with 40-10 mol.% Br. This will result in luminescence in the red region of the visual spectrum.

The lead perovskite of the formula APbX₃ thus contains a monovalent cation A, which is to be provided by the reagent.

In one embodiment, the cation A is an inorganic metal cation capable of perovskite formation, e.g. cesium (Cs), potassium (K), sodium (Na), germanium (Ge), tin (Sn), rubidium (Rb), or combinations thereof. Within this group, cesium is considered preferred for reasons of performance and availability.

The lead perovskite of the formula APbX₃ may also contain a monovalent organoamine cation.

In one embodiment the organoamine cation is an organoammonium cation of the formula R1R2R3N⁺, in which R1, R2, and R3 are selected from hydrogen and C1-C10 alkyl, C4-C10 aryl, C4-C10 alkylaryl, and C4-C10 arylalkyl, with at least one of R1, R2, and R3 being selected from C1-C10 alkyl, C4-C10 aryl, C4-C10 alkylaryl, and C4-C10 arylalkyl. In one embodiment at least one of R1 and R2, more in particular both R1 and R2 are hydrogen. If R1, R2, and R3 are not hydrogen, they are preferably selected from C1-C4 alkyl, C6 aryl, and C7-C10 alkylaryl. Examples of suitable organoammonium cations include methylammonium, ethylammonium, propylammonium, iso-propylammonium, n-butylammonium, iso-butylammonium, t-butylammonium, dimethylammonium, diethylammonium, benzylammonium, and phenylammonium. Within this group, methylammonium has been found to give good results.

In one embodiment, the organoamine cation is a cation of the formula R5R6C=NH₂⁺ in which R5 and R6 are selected from H, NH₂, and C1-C6 alkyl, in particular C1-C4 alkyl, more in particular C1-C2 alkyl, with at least one of R5 and R6 being NH₂. Examples of suitable compounds of this formula include formamidinium (R5 is H, R6 is NH₂), guanidinium (R5 and R6 are NH₂), and acetamidinium (R5 is CH3, R6 is NH₂). Within this group, formamidinium is considered preferred.

In a further embodiment, the organoamine cation is a cyclic onium cation, e.g., a substituted or unsubstituted imidazolium cation, in particular an unsubstituted imidazolium cation.

In a further embodiment the organoamine cation is a diammonium compound, e.g., a cation of the formula R1R2N⁺-A- R1'R2'N⁺ wherein R1, R2, R1', and R2' are independently selected from hydrogen, C1-C10 alkyl, C4-C10 aryl, C4-C10 alkylaryl, and C4-C10 arylalkyl and A is C2-C10 alkylene, arylene, alkylarylene, or arylalkylene. In one embodiment R1, R2, R1', and R2' are all hydrogen. Where one or more of R1, R2, R'1'and R2' are not hydrogen, the preferences given above also apply here. Examples from compounds within this group include ethane-1,2-diammonium, propane-1,3-diammonium, and 1,4-benzene diammonium. In general, the use of halides of cesium, methylammonium, or formamidium is considered preferred at this point in time. Combinations of different types of anions can also be used.

The provision of the halide anion and the metal and/or organoamine cation can be carried out by providing the corresponding metal halides and/or organoamine halides. It is also possible to provide a source for the halide anion and combine it with a source for the cation. The sample can be contacted sequentially with the cation and the anion in either order. It is preferred, however, for the sample to be contacted simultaneously with the cation and the anion in a single reagent composition.

The method of the present invention can be applied on any solid substrate suspected of containing lead. The solid substrate is selected from painted surfaces, glass, metals, and plastics. Depending on its nature, the substrate may be in the form of a layer, particles, powder, or in any other form.

Examples of substrates that can be tested using the method of the invention include paint, glass, metals, e.g. in plumbing, solders, and any other surfaces suspected of containing lead, either as such or through contamination.

It has been found that the method according to the invention allows the detection of lead in very low concentrations. Reference is made, for example, to Example 9, which illustrates that contaminant lead can be detected on gloves, scapels, and other tools. In one embodiment the method according to the invention allows detection of lead in surface concentrations of less than 1 microgram/mm², less than 0.1 microgram/mm², or even less than 0.05 microgram/mm². Amounts of the order of 1.5 ng/mm2 have been detected in practice.

Samples may be pretreated to make them more suitable for testing. In particular, where the sample contains water, which may interfere with perovskite formation, it may be preferred to subject the sample to a drying step before testing.

In the present invention, the reagent composition is provided in a liquid form. This encompasses solutions, but also suspensions, emulsions, dispersions, etc. The advantage of a reagent in liquid form is that it can generally easily be applied onto a substrate by methods like spraying, dripping, wiping, mixing, dipping, stamping, etc. By selecting a suitable application method relatively large surfaces can be treated in one go.

The reagent composition comprises a liquid medium. The medium may serve as a solvent for the halide reagent, but also as a dispersant in the case that the halide reagent does not fully dissolve. In general, it is preferred for the reagent composition to be a solution of the halide reagent in the medium, as solutions are less susceptible to becoming inhomogeneous during storage.

The nature of the liquid medium is not limiting in principle, except that the liquid medium should not react with the reagent in the time frame required to carry out the test. Examples of suitable liquid media include conventional organic solvents such as alcohols (methanol, ethanol, propanol, isopropanol, butanol, pentanol, hexanol, heptanol. octanol, decanol, etc.), aldehydes, and ketones such as acetone, methylethylketone, methylbutylketone, and polar aprotic solvents such as propylene carbonate (PC), dimethylacetamide (DMA) or N-methyl-2-pyrrolidone (NMP). Combinations of solvents may also be used.

Water may also be used as liquid medium. However, as water may interfere with perovskite formation, luminescence may only occur during drying of the sample. Additionally, water may lead to degradation of a perovskite that has been formed. This may make water less preferred, although it can be used under proper conditions. The same applies to other solvents which may interfere with perovskite formation, or which result in degradation of the resulting perovskite. It is within the scope of the skilled person to select a suitable solvent. The reagent composition comprising a liquid medium and a halide reagent may be present on a carrier. The carrier, liquid medium, and halide reagent may be combined in any sequence. In one embodiment, a carrier containing the reagent composition is obtained by first combining the halide reagent and the liquid medium, and then contacting the carrier with the reagent composition comprising the liquid medium and the halide reagent. In another embodiment, the carrier is first provided with the halide reagent, and the carrier provided with the halide reagent is provided with liquid medium. In a further, but generally less preferred embodiment, the carrier is first provided with the liquid medium, and then with the halide reagent.

In one embodiment, the present invention makes use of a testing unit comprising a solid carrier provided with a halide reagent, in particular a halide reagent in finely divided form. The carrier can, in examples not falling under the scope of the invention, be dry (containing the reagent in solid form without liquid medium being present), or wet (containing the reagent and a liquid medium). Such testing units can be used in the testing of solid samples, e.g., by rubbing the testing unit over the surface. They can, in examples not falling under the scope of the invention, also be used in testing liquid samples by dipping the testing unit into the liquid sample, or by providing a drop of the liquid sample onto the testing unit.

In one embodiment, the carrier in the testing unit is of an absorbent material, i.e., a material that is capable of absorbing and retaining a liquid. Absorbent materials include paper, cotton fluff, and any other materials known in the art. If the carrier is an absorbent material, it can ,in examples not falling under the scope of the invention, be used to absorb liquid medium to be tested. Absorbent materials may also be easy to provide with reagent, by the process of contacting the carrier material with a liquid medium comprising the reagent, and allowing the liquid medium to evaporate. Examples of testing units include test strips comprising an absorbent paper carrier provided with reagent, testing units comprising a carrier provided with reagent on a holder, e.g., analogous to a cotton swab.

In one embodiment the present invention makes use of a testing kit comprising a reagent and application means. The reagent can, e.g., be in the form of a liquid medium in a container, or in the form of a solid particulate material in a container, or in the form of a combination of a solid reagent in a container and a separate container comprising a liquid medium to be combined with the solid reagent in a container. Application means are means for applying the reagent onto the sample, e.g., a spraying unit, dropping unit, rubbing unit, including sponges, brushes, sanding paper, and stamping unit. The testing kit can also comprise a test unit comprising a reagent on a carrier, which combines the reagent with the application means.

The testing kit may also comprise a light source, e.g. a UV light source. The testing kit may also comprise detection or recording apparatus. The testing kit may also comprise further containers containing additives, selected, e.g., from oxidizing agents and drying agents. The testing unit may contain optical filters, e.g., short pass filters for reducing the visible light from the UV light source and, where a camera is used, long pass filters on the camera for reducing the UV light reflecting from the sample. The testing kit may further comprise material to protect the tester, e.g., gloves or safety glasses with UV protection. It may also comprise means to take samples from the material to be tested such as spatulas. The testing kit may also contain a lead-containing control sample, which can be used to verify reagent quality. The testing kit may contain further sample vials for storing samples until analysis at a later point in time. The testing unit may contain a sample collection unit, wherein multiple samples can be collected, for simultaneous or separate contacting with the reagent, directly, or at a later point in time. The testing kit may also contain a solvent blanc, i.e., solvent not containing reagent, to verify whether there is any interaction between the solvent and the substrate which generates luminescence.

For large surfaces, a liquid medium in a spray or wipe may be most effective.

The testing unit and/or testing kit may be provided in combination with an instruction leaflet which indicates how the unit or kit should be used in a method for the detection of the presence of lead in a solid substrate suspected of containing lead, comprising the steps of
- contacting a solid substrate suspected of containing lead with a reagent composition comprising a liquid medium and a halide reagent capable of reacting with lead to form a lead halide perovskite, the solid substrate being selected from painted surfaces, glass, metals, and plastics, , and
- subjecting the substrate to a light source with a wavelength that is shorter than the emission wavelength of the lead halide perovskite, and detecting the light emittance. Further embodiments of the method described herein may also be described in said leaflet.

In some cases, the result of the reaction may remain detectable for a long time. In this case, it may be attractive to apply the reagent not directly on the test object, but on a sample taken from the object to be tested. This may, e.g., be applicable for paint. As the method of the invention has a high sensitivity, a small sample will generally suffice.

In the method of the invention, the sample is subjected to a light source with a wavelength that is shorter than the emission wavelength of the lead halide perovskite. For example, a light source emitting green light can be used to detect a red emitting MAI-Br lead perovskite. However, in practice it is often convenient to have a light source emitting light outside the visible spectrum. Accordingly, a light source emitting in the UV range is considered preferred. The UV light source preferably emits light with a wavelength in the range of 100-450 nm, in particular in the range of 200-450 nm, more in particular in the range of 300-450 nm, e.g., in the range of 350-420 nm. Where a light source also emits light in the visible spectrum, filters may be applied to filter out the visible light.

The photoluminescence generated by the presence of the lead halide perovskite can be detected with the naked eye or detected though suitable apparatus, e.g., recorded with a camera, analyzed with a photoluminescence microscope, or detected with a photodiode.

When the reagent is contacted with a lead-containing surface, perovskite formation will start. Depending on the sample, the lead perovskite formation, and thus luminescence, may start immediately, or may be delayed, for a period of up to an hour. In view of the often immediate start of the luminescence, it is preferred that the steps of contacting the sample with the halide reagent and subjecting the sample to UV light, and detecting the light emittance are carried out simultaneously, in other words, that the sample is under UV light when the reagent is provided. In practical operation it may be preferred to switch on the light source before the reagent is applied, to identify the possible presence of luminescent compounds in the sample itself, and to be able to detect any change caused by the addition of the reagent. In some cases it may be appropriate to contact the substrate with solvent only, in the absence of reagent, to verify that there is no interaction between the solvent and the substate which generates luminescence.

It has been found that lead oxide often shows a more immediate response than metallic lead. Therefore, in cases where it is suspected that lead is present in non-oxidic forms, e.g., in lead solder, it may be attractive to subject the sample to a pretreatment with an oxidizing agent. The nature of the oxidizing agent is not critical, as long as it is capable of converting lead into lead oxide and does not interfere with perovskite formation. Strong oxidizing agents are considered preferred. Hydrogen peroxide and sodium hypochlorite are examples of suitable compounds.

Depending on the sample tested, luminescence may decay over time. Where necessary, luminescence can often be restored by reapplying the reagent.

The amount of reagent required will depend on the nature of the sample and the manner in which the reagent is applied. In general, the amount of reagent is not critical, as long as sufficient reagent is applied to obtain a reaction. Where the reagent is provided in liquid form, e.g., in the form of a solution or suspension, it may be preferred to have the concentration of reagent compound as high as possible. In one embodiment, the concentration of halide reagent, or precursors thereof, is at least 0.2 mg/ml, more in particular at least 1 mg/ml, in some embodiments at least 2 mg/ml. Of course, the actual concentration will depend on the nature of the reagent and the nature of the liquid medium. As will be evident, the maximum concentration is the saturation concentration.

In one embodiment, as described above, the step of contacting the solid substrate suspected of containing lead with reagent composition is carried out *in situ,* i.e., at its original location. This allows easy and accurate location-specific detection of lead. This may be attractive, e.g., when it is desired to investigate the scope and location of lead contamination in a certain area. It may also be attractive when investigating mixed materials, e.g., electronic waste where lead may be present in different components (solder, cables, paint), or substrates painted with different types of paint.

In one embodiment, where the step of contacting the solid substrate suspected of containing lead with reagent composition is carried out *in situ,* it may be preferred to have the reagent provided in the liquid form, e.g., in the form of droplets, in particular in the form of a spray. Where a spray is used, it is advantageous to select a solvent which is acceptable from a health, safety and environment (HSE) perspective. For example, ethanol or isopropylalcohol may be attractive.

As will be evident to the skilled person, different embodiments of the present invention can be combined unless they are mutually exclusive. When amounts, concentrations, dimensions, and other parameters are expressed in the form of a range, a preferable range, an upper limit value, a lower limit value, or preferable upper and limit values, it should be understood that any ranges obtainable by combining any upper limit or preferable value with any lower limit or preferable value are also specifically disclosed, irrespective of whether the obtained ranges are clearly mentioned in the context.

It must be noted that as used herein and in the appended claims, the singular forms "a", "an", and "the" include plural references unless the context clearly dictates otherwise. Furthermore, the terms "a" (or "an"), "one or more" and "at least one" can be used interchangeably herein.

The invention will be illustrated by the following examples, without being limited thereto or thereby.

### Examples

### Example 1: Various substrates, various application methods

For the following experiments, the stock solution of MABr in 2-propanol (16 mg/ml) was used. Unless stated otherwise, the sample was in a petri dish. The petri dish with the sample was illuminated with the UV LED (370 nm), and the reaction was observed by eye and camera. A picture was taken before and after application of the reagent. In all cases, the sample was also illuminated before application of the reagent to check for inherent luminescence. None of the samples showed inherent luminescence.

In addition to detecting the luminescence under UV LED illumination, some samples were also illuminated with a UV flashlight (~390 nm) and/or a keychain LED flashlight (405 nm). The keychain LED also emitted white light, which makes the luminescence harder to detect. The intensity of the luminescence of the sample varied. This is indicated below as very bright, bright, less bright, dim, or very dim. Oftentimes, the luminescence decreases in brightness. In those cases, the reagent could be applied again, resulting in temporary increased luminescence intensity. This is indicated in the table as reapplied. Luminescence may occur instantaneously, or it may be delayed. The color of the luminescence was green in all cases.

The following application methods have been used:
- Cotton Swab: A cotton swab is dipped into a solution of reagent. This cotton swab is then rubbed over the sample.
- Micropipette: 2-100 µl reagent solution is applied with a micropipette onto the sample.
- Spray: Approx. 40 mg of reagent solution is applied on the sample with a spray, using a spray bottle containing 1 mL of reagent. One pump of the spray bottle sprays 40 mg of a solution with 16 mg/mL MABr/IPA, that is ~50 µl and thereby ~0.8 mg MABr).
- Airbrush: 5 ml reagent solution is loaded into an airbrush gun. This allows testing large areas by spraying.
- Melamine sponge: A few drops of reagent solution are applied to the melamine sponge. The abrasive properties of the sponge then come into effect when rubbing over a sample. This allows increasing reactivity on bulk samples. It is also possible to first rub the sponge over the substrate and then add the reagent to the sponge.
- Stamp: A thin film of reagent solution is applied to a polymer stamp (PDMS, silicone). This stamp is then applied to the sample.
- Dipping: The sample is dipped into a solution of the reagent and taken out.
- Sandpaper: A piece of sandpaper is wetted with reagent solution and rubbed over the sample.

The results of the tests on various substrates using various application methods are given below.

| **Sample** | **Application** | Luminescence | Time |
|---|---|---|---|
| Lead carbonate powder | spraying (reapplied) | very bright, also with keychain UV | instant |
| Lead carbonate particle film on glass | dipping | very bright | after few seconds |
| Lead carbonate particle film on glass | airbrush | very bright | instant |
| Lead carbonate particle film on glass | stamp | very bright | instant |
| Lead chloride | spraying (reapplied) | bright | instant |
| Lead white (50 mg) (hydrocerussuite, 2PbCO₃·Pb(OH)₂, basic lead carbonate) | drip 50 µl | very bright also under flashlight | instant |
| Lead acetate | spraying | bright | instant |
| Lead nitrate (160 mg) | spraying | very dim | instant |
| Lead oxide | spraying (4x), reapplied through drip 100 µl | dim | after one minute |
| Lead white paint (fresh) | spray | very bright | instant |
| Lead white paint (cured) | cotton swab, soaked in reagent | very bright | instant |
| Metallic lead | cotton swab, soaked in reagent, reapplied as spray alternatively applied with a melamine sponge | less bright | delayed |
| Lead glazing | spray | bright | instant |
| Glass 24%PbO | cotton swab, soaked in reagent, reapplied with sandpaper | less bright | increasing over the course of an hour |
| Rubber coating of wires | spray | very bright | instant |
| Lead battery cut in half | spray | bright | instant |
| Debris from sawing battery | spray | bright | instant |
| Lead-Tin (60-40) solder | spray or brush, alternatively with melamine sponge | less bright | delayed, instant with sponge |
| Lead fluoride | dripping | bright | delayed |
| Lead bromide | dripping | very bright | instant |
| Lead iodide | dripping | less bright, red shift | delayed |

Traditional lead white paint was prepared by combining 1 gram lead white with 0.4 gram of linseed oil. Lead white paint was cured in an oven for 60 minutes at 120°C.

The table shows that lead can be detected in a variety of substrates using a variety of application methods. Figures 1 and 2 illustrate the testing of respectively the lead-acid battery and lead-containing paint. Figure 1 shows the cross-section of the lead-acid battery. The left-hand photo shows the cross-section after cutting but before testing. The right-hand photo shows the cross-section after exposure to MABr. Bright green emission is visible as white highlight. Figure 2 shows a white lead-containing paint at the top of the photograph. Two cotton swabs are shown, both impregnated with reagent. The reagent-infused cotton swab on the left has been in contact with the lead-containing paint. It shows bright green luminescence under UV illumination (here visible as white highlight). The right-hand cotton swab was also infused with reagent. It has not been in contact with the paint and does not show light emission.

Metallic lead that has been exposed to air is covered in a native oxide layer. This oxide layer instantly reacts when contacted with the reagent. The freshly cut side, which does not have an oxide layer, reacts slower. The MABr-perovkite itself (without UV irradiation) is yellow to orange. This could easily be seen on lead carbonate and lead white. In contrast, on metallic lead this color change is difficult to observe.

### Example 2: Reference tests

To verify the selectivity of the method for the detection of lead, various other substrates were tested that do not contain lead using the reagent and detection method of Example 1. The results are below.

| Substrate | application | result | comment |
|---|---|---|---|
| Copper | cotton swab, soaked in reagent solution | no luminescence | copper is often used for waterpipes and in electronics. The test does not create false positives for copper. |
| Aluminium | cotton swab, soaked in reagent solution | no luminescence | no luminescence observable. |
| Tin | cotton swab, soaked in reagent solution | no luminescence | no luminescence observable. |
| Tin solder | cotton swab, soaked in reagent solution | no luminescence | tin solder is often used in electronic applications. The test does not create a false positive for tin. |
| SnCl2 | spray | no luminescence | no luminescence observable. |
| TiO2 | spray | no luminescence | TiO2 is a commonly used white pigment to replace lead. The test does not create false positives for TiO2 |
| ZnO2 | spray | no luminescence | ZnO2 is a commonly used white pigment to replace lead. The test does not create false positives for ZnO2 |
| Glass | cotton swab, soaked in reagent | no luminescence | no luminescence observable on conventional glass for beverages. |
| Titanium | dripping | no luminescence | |
| Iron | dripping | no luminescence | |
| Brass | dripping | no luminescence | |
| Bronze | dripping | no luminescence | |
| Stainless Steel | dripping | no luminescence | |
| CaCO3 | dripping | no luminescence | CaCO3 shows intrinsic blue luminescence prior to addition of MABr |
| Ba(NO3)2 | dripping | no luminescence | |
| Ba(OAc)2 | dripping | no luminescence | |
| BaCl2 | dripping | no luminescence | |
| BaSO4 | dripping | no luminescence | BaSO4 shows some intrinsic luminescence prior to addition of MABr |
| CdSO4 | dripping | no luminescence | |
| CeO2 | dripping | no luminescence | |
| Cu(acac)2 | dripping | no luminescence | |
| Cu(NO3)2 | dripping | no luminescence | |
| CuBr2 | dripping | no luminescence | |
| CuCl | dripping | no luminescence | |
| CuCl2 | dripping | no luminescence | |
| FeCl2 | dripping | no luminescence | |
| Gel2 | dripping | no luminescence | |
| KBr | dripping | no luminescence | |
| MgSO4 | dripping | no luminescence | |
| SeO2 | dripping | no luminescence | |
| SnCl4 | dripping | no luminescence | |
| SnF2 | dripping | no luminescence | |
| SnO | dripping | no luminescence | |
| SnO2 | dripping | no luminescence | |
| Zn | dripping | no luminescence | |
| Zn(OAc)2 | dripping | no luminescence | |
| ZnO | dripping | no luminescence | |
| ZrSO4 | dripping | no luminescence | |

It can be seen that the method of the present invention is selective for lead also as compared to conventional lead replacements.

### Example 3: Solvent screening

Solutions of MABr in different solvents were prepared. The solutions were applied onto a film of lead carbonate nanocrystals. The results are provided in the following table:

| solvent | Application | Comment |
|---|---|---|
| 16mg/ml MABr in IPA | 3 µl with pipette | instant (less than 1s) green luminescence |
| 10mg/ml MABr in Methanol | 3 µl with pipette | green luminescence emerges during drying of the sample |
| 10mg/mL MABr in H2O | 1 µl with pipette | green luminescence emerges during drying of the sample |
| 10mg/ml MABr in Ethanol | 2 µl with pipette | green luminescence emerges during drying of the sample |
| 5mg/ml MABr in Acetone | 5 µl with pipette | green luminescence emerges during drying of the sample |
| 18mg/ml MABr in Butanol (not fully dissolved, used supernatant) | 50 µl with pipette | instant green luminescence. Repeating on 100 mg PbCO3 powder also gave instant green luminescence. |

This example shows that various solvents can be applied in the process of the invention.

### Example 4: Different types of halide and halide mixtures

To investigate the effect of different types of halide reagents, solutions in IPA were prepared of the following reagents: formamidium bromide (FABr), formamidium chloride (FACI), formamidium iodide (FAI), methylammonium bromide (MABr), methylammonium chloride (MACI), and formamidium iodide (FAI). The total halide concentration is typically approximately 0.16 mol/L. In the case of MACI some crystals may remain undissolved; here the supernatant is used.

The solutions were then mixed in various ratios and applied onto a lead carbonate particle film. The sample was then illuminated with a UV LED (370 nm). The observations for some specific examples are given in the following table:

| **Compound** | **Approximate molar ratio** | **Observed emission color** |
|---|---|---|
| FACl-Br | Cl to Br is 6:4 | blue |
| FABr | - | green |
| FABr-I | Br to I is 2:8 | red |
| MABr-Cl | Cl to Br is 6:4 | blue |
| MABr | - | green |
| MABr-I | Br to I is 2:8 | red |

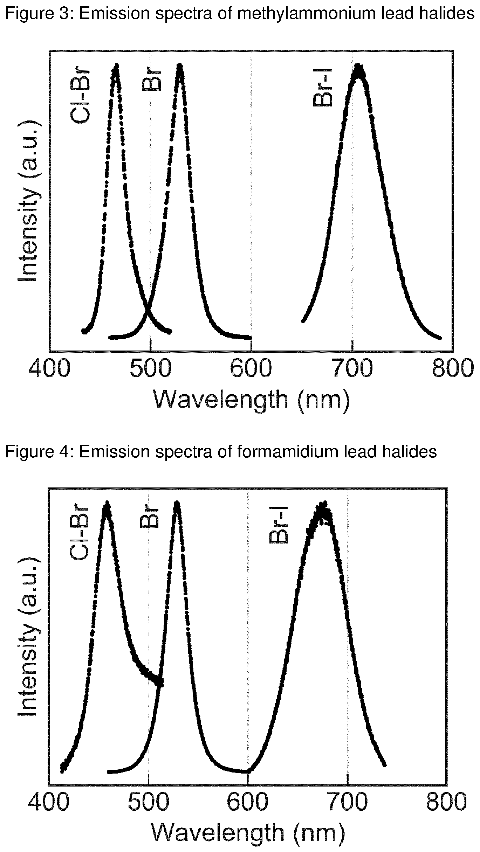

Figure 3 provides emission spectra for methyl ammonium lead halides, the halide being, from left to right, Cl-Br, Br, and Br-I. Figure 4 provides emission spectra for formamidium lead halides, the halide being, from left to right, Cl-Br, Br, and Br-I. As can be seen from these figures, the emission peaks are quite distinct.

Two further reagents were tested, as follows:

| **Compound** | **Comment** | **Observed emission color** |
|---|---|---|
| Butylammonium iodide | saturate solution in IPA tested on PbCO3 | green |
| Phenethylammonium iodide | Saturate solution in IPA tested on PbCO3 | green |

### Example 5: Reliability of the test in the presence of other metal ions

Solutions were prepared of 0.01 mol/L of various metal combinations. A 5µL drop onto a clay substrate and left to dry. Then the reagent (MABr, concentration as in example 1) was applied. The luminescence was recorded under UV light with a photo camera.

In all cases the reaction took place and could be detected. In the presence of copper, iron, or nickel the luminescence was weaker than usual, but still clearly detectable.

| Metals | application | Luminescence intensity | Comment |
|---|---|---|---|
| Lead (no other metals) | dripping | bright | this is the reference brightness |
| Lead & Copper | dripping | dim | |
| Lead & Nickel | dripping | dim | |
| Lead & Silver | dripping | bright | |
| Lead & Calcium | dripping | bright | |
| Lead & Iron | dripping | very dim | |

### Example 6: Formamidium bromide reagent on different substrates

The FABr reagent described in Example 5 above was tested on a series of samples. The samples were irradiated with UV light (370nm) to study their emission.

| **Reagent** | **Sample** | **Application** | **Comment** |
|---|---|---|---|
| FABr | PbCO3 (10mg, powder) | 10µl with pipette | very bright green luminescence |
| FABr | aluminum | cotton swab dipped in reagent solution | no light emission, no false positives with aluminum |
| FABr | copper | cotton swab dipped in reagent solution | no light emission, no false positives with copper |
| FABr | lead paint, fresh | cotton swab dipped in reagent solution | bright green, same lead paint as for the MABr experiments |
| FABr | lead paint cured | cotton swab dipped in reagent solution | bright green, same lead paint as for the MABr experiments |
| FABr | metallic lead | cotton swab dipped in reagent solution | less bright green, same as for the MABr experiments |

### Example 7: Detection of lead in water scale

To mimic the possibility of detecting lead in water scale, the following experiment was carried out. A solution with 5 ppt lead (5 mg Pb2+ per mL, prepared from lead acetate trihydrate) and 1mM CaCO3 (1 mmol CaCO3 per liter, prepared from calcium chloride dihydrate) were prepared. 10 ml of this solution was prepared. To mimic the typical scaling process through CO2, 100ml of Na2CO3 (10 mg/ 10 mL) was added. The solution was then filtered to collect the precipitate.

In one experiment, the precipitate was tested for lead by rubbing with a cotton swab provided with MABr by dipping a cotton swab in the MABr solution of Example 1, and allowing the solvent to evaporate. In another experiment, the precipitate was sprayed with the MABr solution of Example 1. The UV LED was used to illuminate the samples. In both cases, bright green luminescence could be seen with the naked eye as well as with a camera. The experiment was repeated in the absence of lead. In that case, no luminescence of the precipitate was obtained.

To mimic lead detection in water scale containing low amounts of lead, the following test was carried out: 5mg PbCO3 were dispersed in 1g CaCO3. The mixture was sprayed with the MABr solution of Example 1. Local bright green luminescence reveals lead contamination.

This example shows that it is possible to detect the presence of lead, also in low amounts in scale of drinking water.

### Example 8: Detection of lead in soil

Soil samples were collected and sprayed with the MABr solution of example 1. The samples were illuminated using the UV LED described above. A first sample was tested as collected. No luminescence was detected. A second sample was dried for 2 hours at 100 °C. Again, no luminescence was detected.

A lead-containing sample was prepared by contacting 36 grams of soil (dry weight, after 2 hours at 100°C) with 100 microliters of a solution of 8 mg/ml lead nitrate in water, i.e., 0.8 mg lead nitrate. The sample was mixed and dried for 2 hours at 100°C. After spraying with the MABr solution of Example 1, bright green luminescence was detected throughout the sample under the UV LED described above.

A further lead-containing sample was prepared by contacting 18 grams of soil (dry weight, after 2 hours at 100°C) with 60 mg solid PbCO₃. The sample was mixed and dried for 2 hours at 100°C. After spraying with the MABr solution of Example 1, local bright green luminescence was detected under the UV LED described above, showing local lead contamination.

### Example 9: Detection of contaminant lead

A scalpel used to cut metallic lead was contacted with the MABr reagent of Example 1 and illuminated with the UV LED. The presence of lead on the part of the blade which had been in contact with the metallic lead could be detected by instant bright luminescence. The rest of the scalpel did not show luminescence.

Gloves worn during the preparation of the test solution of lead carbonate and calcium carbonate in Example 6 above were contacted with the MABr reagent of Example 1 and illuminated with the UV LED. Some luminescent spots could be seen, indicative of lead contamination.

Contamination on tools used to open the lead-acid battery were examined. The stainless-steel tray on which the lead-acid battery of Example 1 had been cut open was thoroughly washed (water with soap, ethanol). After it had dried, MABr reagent of Example 1 was sprayed onto it. Illumination with the UV LED revealed areas still contaminated with lead.

Furthermore, a drill that had been used to drill into the battery and the gloves which were used to carry out the revealed lead when tested in the same manner.

### Example 10: Inorganic halide reagents

To investigate the possibility of using metal halide reagents, 19 mg CsBr were mixed in 1 mL isoprolylalcohol, and the supernatant was used in the following experiment. 50 µl of the supernatant solution was applied on 100 mg PbCO₃. Under UV (370 nm) illumination, bright green emission was observed.

Furthermore, a slurry of CsBr in butanol was prepared. Bringing PbCO3 in contact with this slurry resulted in bright green emission as well.

### Example 11: Pretreatment of samples

Some samples, such as lead solder, exhibit a delay in the formation of luminescence despite the high lead content. We demonstrate approaches to increase the reactivity by pretreatment with oxidizers.
1. Of two lead solder samples (60 lead, 40 tin), one is brushed with H2O2 (30%, aqueous solution). After the H2O2 has evaporated, MABr/IPA (as above) is sprayed on both samples simultaneously. The pre-treated sample lighted up instantly under UV (370nm) illumination, whereas luminescence of the other sample was slower to evolve.
2. In an identical setup to (1) one sample was brushed with sodium hypochlorite (5%, household grade for cleaning). After 3 minutes the treated sample was wiped clean with a wet cloth. Once the wiped sample has dried, MABr/IPA (as above) was sprayed on both samples simultaneously. The pre-treated sample lighted up instantly under UV (370 nm) illumination, whereas luminescence of the other sample was slower to evolve.

### Example 12: Confirmation of lead halide perovskite formation

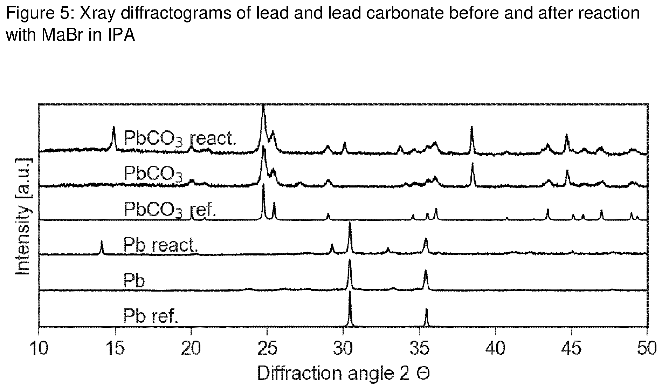

The detection relies on the formation of the luminescent perovskite. Another option to verify that the formed material is indeed perovskite, is x-ray diffraction. We tested this on two samples: metallic lead and a lead carbonate film. The two samples were exposed to the MABr/IPA solution of example 1 for 120 and 50 minutes respectively. Figure 5 provides the results. Comparing the diffractograms before and after exposure reveals the formation of perovskite (characteristic peak at 14-15° in this sample). It is noted that the height of the samples varied, leading to a shift in diffraction peaks. The metallic lead samples are calibrated on a diffractogram generated by COD 2300256 (crystallographic open database), the lead carbonate is aligned to a reference calculated from ICSD 166089. Additional peaks may come from the native oxide layer on lead and the aluminium substrate.

## Claims

1. Method for the detection of the presence of lead in a solid substrate suspected of containing lead, comprising the steps of
- contacting a solid substrate suspected of containing lead with a reagent composition comprising a liquid medium and a halide reagent capable of reacting with lead to form a lead halide perovskite, the solid substrate being selected from painted surfaces, glass, metals, and plastics, and
- subjecting the substrate to a light source with a wavelength that is shorter than the emission wavelength of the lead halide perovskite, and detecting the light emittance.

2. Method according to claim 1, in which the step of contacting the solid substrate suspected of containing lead with reagent composition is carried out in situ.

3. Method according to any one of the preceding claims, wherein the solid substrate is selected from painted surfaces

4. Method according to any one of the preceding claims, wherein the step of contacting a solid substrate suspected of containing lead with the reagent composition is carried out by providing one or more droplets of a liquid medium containing a halide reagent dissolved or suspended therein, preferably dissolved, on the solid substrate.

5. Method according to claim 4, wherein the liquid medium is provided by spraying.

6. Method according to any one of claims 1-3, wherein the step of contacting a solid substrate suspected of containing lead with the reagent composition is carried out by contacting the solid substrate with an absorbent material containing a halide reagent and a liquid medium, e.g., by wiping.

7. Method according to any one of the preceding claims, wherein the liquid medium is selected from alcohols, such as methanol, ethanol, propanol, isopropanol, butanol, pentanol, hexanol, heptanol. octanol, decanol, etc., aldehydes and ketones such as acetone, methylethylketone, methylbutylketone, and polar aprotic solvents such as propylene carbonate, PC, DMA, or N-methyl-2-pyrrolidone, NMP, in particular alcohols, such as methanol, ethanol, propanol, isopropanol, butanol, pentanol, hexanol, heptanol. octanol, decanol, etc., specifically isopropanol.

8. Method according to any one of the preceding claims, wherein the halide reagent comprises a halogen anion selected from anions of F, Cl, Br, and I and combinations thereof, in particular Cl, Br, I or combinations thereof, in particular Br, optionally in combination with Cl or I.

9. Method according to any one of the preceding claims, wherein the halide reagent comprises one or more of
- monovalent metal cations capable of perovskite formation, e.g. cesium, Cs, potassium, K, sodium, Na, germanium, Ge, tin, Sn, rubidium, Rb, or combinations thereof, preferably Cs,
- an organoamine cation which is an organoammonium cation of the formula R1R2R3N+, in which R1, R2, and R3 are selected from hydrogen and C1-C10 alkyl, C4-C10 aryl, C4-C10 alkylaryl, and C4-C10 arylalkyl, with at least one of R1, R2, and R3 being selected from C1-C10 alkyl, C4-C10 aryl, C4-C10 alkylaryl, and C4-C10 arylalkyl,
- an organoamine cation of the formula R5R6C=NH2+ in which R5 and R6 are selected from H, NH2, and C1-C6 alkyl, in particular C1-C4 alkyl, more in particular C1-C2 alkyl, with at least one of R5 and R6 being NH2,
- an organoamine cation which is a cyclic onium cation, e.g., a substituted or unsubstituted imidazolium cation, in particular an unsubstituted imidazolium cation,
- an organoamine cation which is a diammonium compound, e.g., a cation of the formula R1R2N+-A- R1'R2'N+ wherein R1, R2, R1', and R2' are independently selected from hydrogen, C1-C10 alkyl, C4-C10 aryl, C4-C10 alkylaryl, and C4-C10 arylalkyl and A is C2-C10 alkylene, arylene, alkylarylene, or arylalkylene.

10. Method according to any one of the preceding claims wherein the halide reagent comprises a halide compound selected from halides of cesium, methylammonium, and formamidium.

11. Method according to any one of the preceding claims, wherein the sample is contacted with an oxidizing agent prior to contacting with the halide reagent.

## Patentansprüche

1. Verfahren zum Nachweis des Vorhandenseins von Blei in einem festen Substrat, von dem vermutet wird, dass es Blei enthält, umfassend die Schritte
- Kontaktieren eines festen Substrats, von dem vermutet wird, dass es Blei enthält, mit einer Reagenzzusammensetzung, die ein flüssiges Medium und ein Halogenid-Reagenz, das in der Lage ist, mit Blei unter Bildung eines Blei-Halogenid-Perowskits zu reagieren, enthält, wobei das feste Substrat ausgewählt ist aus gestrichenen Oberflächen, Glas, Metallen und Kunststoffen, und
- Aussetzen des Substrats einer Lichtquelle mit einer Wellenlänge, die kürzer ist als die Emissionswellenlänge des Blei-Halogenid-Perowskits, und Nachweis der Lichtemission.

2. Verfahren nach Anspruch 1, wobei der Schritt des Kontaktierens des festen Substrats, von dem vermutet wird, dass es Blei enthält, mit der Reagenzzusammensetzung in situ durchgeführt wird.

3. Verfahren nach einem der vorhergehenden Ansprüche, wobei das feste Substrat aus gestrichenen Oberflächen ausgewählt ist.

4. Verfahren nach einem der vorhergehenden Ansprüche, wobei der Schritt des Kontaktierens eines festen Substrats, von dem vermutet wird, dass es Blei enthält, mit der Reagenzzusammensetzung durch Bereitstellen eines oder mehrerer Tröpfchen eines flüssigen Mediums, das ein darin gelöstes oder suspendiertes, vorzugsweise gelöstes, Halogenid-Reagenz enthält, auf dem festen Substrat durchgeführt wird.

5. Verfahren nach Anspruch 4, wobei das flüssige Medium durch Sprühen bereitgestellt wird.

6. Verfahren nach einem der Ansprüche 1-3, wobei der Schritt des Kontaktierens eines festen Substrats, von dem vermutet wird, dass es Blei enthält, mit der Reagenzzusammensetzung durch Kontaktieren des festen Substrats mit einem Absorptionsmaterial, das ein Halogenid-Reagenz und ein flüssiges Medium enthält, z.B. durch Wischen, durchgeführt wird.

7. Verfahren nach einem der vorhergehenden Ansprüche, wobei das flüssige Medium ausgewählt ist aus Alkoholen, wie z.B. Methanol, Ethanol, Propanol, Isopropanol, Butanol, Pentanol, Hexanol, Heptanol, Octanol, Decanol usw., Aldehyden und Ketonen, wie z.B. Aceton, Methylethylketon, Methylbutylketon, und polaren aprotischen Lösungsmitteln, wie z.B. Propylencarbonat, PC, DMA oder N-Methyl-2-pyrrolidon, NMP, insbesondere Alkoholen, wie z.B. Methanol, Ethanol, Propanol, Isopropanol, Butanol, Pentanol, Hexanol, Heptanol, Octanol, Decanol usw., insbesondere Isopropanol.

8. Verfahren nach einem der vorhergehenden Ansprüche, wobei das Halogenid-Reagenz ein Halogenanion, ausgewählt aus Anionen von F, Cl, Br und I und Kombinationen davon, insbesondere Cl, Br, I oder Kombinationen davon, insbesondere Br, gegebenenfalls in Kombination mit Cl oder I, umfasst.

9. Verfahren nach einem der vorhergehenden Ansprüche, wobei das Halogenid-Reagenz eines oder mehrere von
- einwertigen Metallkationen, die zur Perowskitbildung in der Lage sind, z.B. Cäsium, Cs, Kalium, K, Natrium, Na, Germanium, Ge, Zinn, Sn, Rubidium, Rb, oder Kombinationen davon, vorzugsweise Cs,
- einem Organoaminkation, bei dem es sich um ein Organoammoniumkation der Formel R1R2R3N+ handelt, wobei R1, R2 und R3 ausgewählt sind aus Wasserstoff und C1-C10-Alkyl, C4-C10-Aryl, C4-C10-Alkylaryl und C4-C10-Arylalkyl, wobei mindestens eines von R1, R2 und R3 ausgewählt ist aus C1-C10-Alkyl, C4-C10-Aryl, C4-C10-Alkylaryl und C4-C10-Arylalkyl,
- einem Organoaminkation der Formel R5R6C=NH2+, wobei R5 und R6 ausgewählt sind aus H, NH2 und C1-C6-Alkyl, insbesondere C1-C4-Alkyl, stärker bevorzugt C1-C2-Alkyl, wobei mindestens eines von R5 und R6 NH2 ist,
- einem Organoaminkation, bei dem es sich um ein cyclisches Oniumkation handelt, z.B. einem substituierten oder unsubstituierten Imidazoliumkation, insbesondere einem unsubstituierten Imidazoliumkation,
- einem Organoaminkation, bei dem es sich um eine Diammoniumverbindung handelt, z.B. einem Kation der Formel R1R2N+-A-R1'R2'N+, wobei R1, R2, R1' und R2' unabhängig ausgewählt sind aus Wasserstoff, C1-C10-Alkyl, C4-C10-Aryl, C4-C10-Alkylaryl und C4-C10-Arylalkyl und A gleich C2-C10-Alkylen, Arylen, Alkylarylen oder Arylalkylen ist, umfasst.

10. Verfahren nach einem der vorhergehenden Ansprüche, wobei das Halogenid-Reagenz eine Halogenidverbindung, ausgewählt aus Halogeniden von Cäsium, Methylammonium und Formamidium, umfasst.

11. Verfahren nach einem der vorhergehenden Ansprüche, wobei die Probe vor dem Kontaktieren mit dem Halogenid-Reagenz mit einem Oxidationsmittel kontaktiert wird.

## Revendications

1. Procédé de détection de la présence de plomb dans un substrat solide suspecté de contenir du plomb, comprenant les étapes consistant à
- mettre en contact un substrat solide suspecté de contenir du plomb avec une composition de réactif comprenant un milieu liquide et un réactif d'halogénure capable de réagir avec du plomb pour former une pérovskite d'halogénure de plomb, le substrat solide étant choisi parmi des surfaces peintes, du verre, des métaux et des matières plastiques, et
- soumettre le substrat à une source de lumière d'une longueur d'onde qui est inférieure à la longueur d'onde d'émission de la pérovskite d'halogénure de plomb, et détecter l'émissivité lumineuse.

2. Procédé selon la revendication 1, dans lequel l'étape de mise en contact du substrat solide suspecté de contenir du plomb avec la composition de réactif est réalisée in situ.

3. Procédé selon quelconque des revendications précédentes, dans lequel le substrat solide est choisi parmi des surfaces peintes.

4. Procédé selon quelconque des revendications précédentes, dans lequel l'étape de mise en contact d'un substrat solide suspecté de contenir du plomb avec la composition de réactif est réalisée en fournissant une ou plusieurs gouttelettes d'un milieu liquide contenant un réactif d'halogénure dissous ou en suspension à l'intérieur, de préférence dissous, sur le substrat solide.

5. Procédé selon la revendication 4, dans lequel le milieu liquide est fourni par pulvérisation.

6. Procédé selon quelconque des revendications 1 à 3, dans lequel l'étape de mise en contact d'un substrat solide suspecté de contenir du plomb avec la composition de réactif est réalisée en mettant le substrat solide en contact avec un matériau absorbant contenant un réactif d'halogénure et un milieu liquide, par exemple, par frottement.

7. Procédé selon quelconque des revendications précédentes, dans lequel le milieu liquide est choisi parmi des alcools, tels que méthanol, éthanol, propanol, isopropanol, butanol, pentanol, hexanol, heptanol, octanol, décanol, etc., des aldéhydes et cétones tels que acétone, méthyléthylcétone, méthylbutylcétone et des solvants aprotiques polaires tels que carbonate de propylène, pC, DMA ou N-méthyl-2-pyrrolidone, NMP, en particulier des alcools, tels que méthanol, éthanol, propanol, isopropanol, butanol, pentanol, hexanol, heptanol, octanol, décanol, etc., spécifiquement de l'isopropanol.

8. Procédé selon quelconque des revendications précédentes, dans lequel le réactif d'halogénure comprend un anion halogène choisi parmi des anions de F, Cl, Br, et I et des combinaisons de ceux-ci, en particulier Cl, Br, I ou des combinaisons de ceux-ci, en particulier Br, facultativement en combinaison avec Cl ou I.

9. Procédé selon quelconque des revendications précédentes, dans lequel le réactif d'halogénure comprend un ou plusieurs des éléments suivants
- des cations métalliques monovalents capables de former de la pérovskite, par exemple césium, Cs, potassium, K, sodium, Na, germanium, Ge, étain, Sn, rubidium, Rb, ou des combinaisons de ceux-ci, de préférence Cs,
- un cation organoamine qui est un cation organoammonium de formule R1R2R3N+, où R1, R2 et R3 sont choisis parmi de l'hydrogène et alkyle en C1 à C10, aryle en C4 à C10, alkylaryle en C4 à C10 et arylalkyle en C4 à C10, avec au moins l'un des R1, R2 et R3 qui est choisi parmi alkyle en C1 à C10, aryle en C4 à C10, alkylaryle en C4 à C10 et arylalkyle en C4 à C10,
- un cation organoamine de formule R5R6C=NH2+ où R5 et R6 sont choisis parmi H, NH2 et alkyle en C1 à C6, en particulier alkyle en C1 à C4, plus particulièrement alkyle en C1 à C2, avec au moins l'un des R5 et R6 qui est NH2,
- un cation organoamine qui est un cation onium cyclique, par exemple un cation imidazolium substitué ou non substitué, en particulier un cation imidazolium non substitué,
- un cation organoamine qui est un composé diammonium, par exemple, un cation de formule R1R2N+-A- R1'R2'N+ dans lequel R1, R2, R1', et R2' sont choisis indépendamment parmi de l'hydrogène, alkyle en C1 à C10, aryle en C4 àC10, alkylaryle en C4 à C10, et arylalkyle en C4 à C10 et A est alkylène, arylène, alkylarylène, ou arylalkylène en C2 à C10.

10. Procédé selon quelconque des revendications précédentes dans lequel le réactif d'halogénure comprend un composé d'halogénure choisi parmi des halogénures de césium, de méthylammonium et de formamidium.

11. Procédé selon quelconque des revendications précédentes, dans lequel l'échantillon est mis en contact avec un agent oxydant avant d'être mis en contact avec le réactif d'halogénure.
